# EUROPEAN PATENT APPLICATION

(11) **EP 2 214 240 A1**
(43) Date of publication of application: **04.08.2010**
(21) Application number: 08840547.7
(22) Date of filing: 14.10.2008
(51) Int. Cl.: H01M 8/02, C08G 73/10, H01M 4/90, H01M 8/10

(54) **SEPARATION MEMBRANE FOR FUEL CELL**

(30) Priority: 15.10.2007 JP 2007267910
(71) Applicant: Tokuyama Corporation, Shunan-shi, Yamaguchi 745-8648 (JP)
(72) Inventor: MATSUI, Shingo, Shunan-shi Yamaguchi 745-8648 (JP); KAWAHARA, Takeo, Shunan-shi Yamaguchi 745-8648 (JP); FUKUTA, Kenji, Shunan-shi Yamaguchi 745-8648 (JP); YANAGI, Hiroyuki, Shunan-shi Yamaguchi 745-8648 (JP)
(74) Representative: Duckworth, Timothy John
(86) International application number: PCT/JP2008/068572
(87) International publication number: WO 2009/051101

(57) **Abstract**

The present invention can provide an anion exchange type separation membrane used for direct liquid fuel type fuel cell, high in heat resistance, hard to deteriorate when using and capable of obtaining high battery output. A composite membrane used as the separation membrane for fuel cell can be obtained by using a porous film, composed of a hydrolysis resistant polyimide resin such as a polyimide resin having a fluorenylidene group in a main framework, as a substrate; optionally increasing water retention characteristics for example by applying a water-retentive resin to at least a part of a surface of the porous film; and then filling an anion-exchange resin such as a cross-linked hydrocarbon-based anion-exchange resin having a quaternary ammonium group as an anion exchange group into a void portion of the porous film.

## Description

### FIELD OF THE INVENTION

The present invention relates to a separation membrane for fuel cell, specifically a separation membrane having an anion exchange group used for direct liquid fuel-typed fuel cell.

### DESCRIPTION OF THE RELATED ART

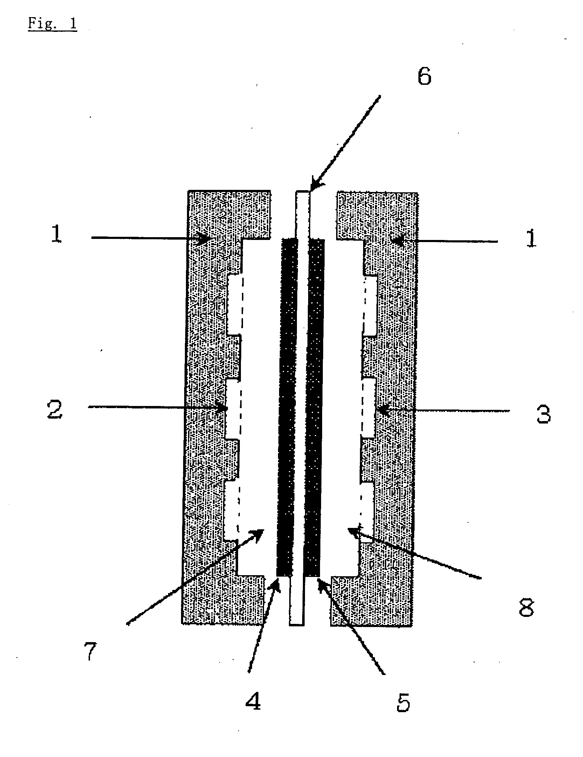

A solid polymer type fuel cell is a fuel cell using a solid polymer, such as an ion exchange resin, as an electrolyte. The solid polymer type fuel cell has, as shown in Fig. 1, a basic structure wherein a space surrounded by cell bulkhead 1 having fuel gas flow hole 2 and oxidizing gas flow hole 3, respectively communicated with outside, is divided by an assembly in which a fuel chamber side gas diffusion electrode 4 and an oxidizing agent chamber side gas diffusion electrode 5 are bonded to both surfaces of a solid polymer electrolyte membrane 6 respectively, to form fuel chamber 7 communicated with outside via fuel gas flow hole 2 and an oxidizing agent chamber 8 communicated with outside via oxidizing gas flow hole 3. Note that the cell bulkhead 1 and solid polymer electrolyte membrane 6 are separated in Fig. 1 for easily understanding the structure of each member, but these are sealed by a gasket, etc., when actually using.

Normally, a cation exchange type electrolyte membrane has been used as a solid electrolyte membrane 6 in a conventional solid polymer type fuel cell. In this case, a catalyst included in the electrode contacts with fuel in a fuel chamber side gas diffusion electrode 4 to generate a proton (hydrogen ion). The generated proton is conducted in the solid polymer electrolyte membrane 6 and moves into the oxidizing agent chamber 8 to generate water by reacting with oxygen in the oxidizing agent gas at the oxidizing agent chamber side gas diffusion electrode 5. On the other hand, an electron generated simultaneously with the proton in the fuel chamber side gas diffusion electrode 4 moves to the oxidizing agent chamber side gas diffusion electrode 5 through the external load circuit, so that it is possible to use the above reaction energy as an electric energy.

However, in the solid polymer type fuel cell using a cation exchange type electrolyte membrane as a solid electrolyte membrane, a reaction field is strongly acidic, and therefore, a problem arises that only an expensive noble metal catalyst such as platinum, which is hardly dissolved even under a strongly-acidic condition, can be used.

On the other hand, when using an anion exchange type electrolyte membrane as a solid electrolyte membrane, fuel is provided to a fuel chamber side, and oxygen and water are provided to an oxidizing agent chamber side, by which an effect of a catalyst included in the electrode allows generating a hydroxide ion from oxygen and water in an oxidizing agent chamber side gas diffusion electrode 5. The hydroxide ion is conducted in a solid polymer electrolyte membrane 6 composed of the above anion exchange type electrolyte membrane, and moves to a fuel chamber 7. In a fuel chamber side gas diffusion electrode 4, the hydroxide ion reacts with fuel to generate water and to simultaneously release an electron as a source of electrical energy. As described above, when using an anion exchange membrane, an ion species moving in the solid polymer electrolyte membrane 6 is a hydroxide ion, and reaction field is basic atmosphere. Therefore, restriction to the catalyst can be greatly reduced, and inexpensive transition metal catalyst can be used.

Although it has such an excellent advantage, a solid polymer type fuel cell using an anion exchange type electrolyte membrane has not attracted attention, and there are much fewer reported examples thereof than those using a cation exchange type electrolyte membrane. This is because the conducted ion is hydroxide ion, which is larger than proton, and is therefore considered of being harder to increase its conductivity. Based on such conditions, an anion exchange type separation membrane for direct liquid fuel type fuel cell has not also been well studied, and only a few examples are known: (1) a membrane in which an anion exchanger is supported by a porous film composed of polyolefin or polyfluoroolefin (see Patent Article 1); (2)a membrane composed of an unchanged polymer in which an anion exchange group is introduced to a polymer having a backbone connected by an aromatic ring via -O-group, -S-group and the like, or a membrane in which the above polymer is reinforced with a reinforcing cloth (see Patent Article 2); and (3) an anion exchange membrane obtained by radiation graft polymerization of a monomer containing an anion exchange group with a substrate composed of fluorine-containing polymer (see Patent Article 3); etc.

[Patent Article 1] The Japanese Unexamined Patent Publication H11-135137,
[Patent Article 2] The Japanese Unexamined Patent Publication H11-273695,
[Patent Article 3] The Japanese Unexamined Patent Publication 2000-331693.

### DISCLOSURE OF INVENTION

### PROBLEM TO BE SOLVED BY THE INVENTION

A separation membrane for direct liquid fuel type fuel cell is generally produced by contacting polymerizable composition, composed of a polymerizable monomer having a group to be a precursor of an ion exchange group and a crosslinkable polymerizable monomer, with a substrate such as nonwoven fabric and microporous film, and polymerizing the polymerizable composition by filling in a void portion of the substrate, followed by a treatment to convert said group to be a precursor into an ion exchange group. Note that the substrate such as nonwoven fabric and microporous film is used because it is difficult to form a membrane with high strength only from an ion exchange resin.

Even when producing an anion exchange type separation membrane for direct liquid fuel type fuel cell according to said prior arts (1) to (3), such a method can be adapted. However, in case a polyfluoroolefin-based porous film is used as the substrate, there are the following problems: a problem that water retention ability is not sufficient; a problem that it is difficult to reduce electrical resistance by making the membrane thinner because of low physical strength; and further a problem that when using methanol as fuel, permeability of methanol becomes high and effective availability of fuel can be lowered. Also, polyolefin-based porous film has other problems such as insufficient heat resistance, which causes to restrict a temperature of usage environment.

Consequently, the present invention aims at providing an anion exchange type separation membrane for direct liquid fuel type fuel cell without the above problems.

### MEANS FOR SOLVING THE PROBLEM

The present inventors considered it possible to solve the above problems by using a porous film comprising a resin with high heat resistance as a substrate, and tried to use a polyimide porous film (e.g. the film shown in the Japanese Unexamined Patent Publication 2004-171994), used as a substrate for a cation exchange type separation membrane for direct liquid fuel type fuel cell, as an anion exchange type separation membrane for direct liquid fuel type fuel cell. As a result, it has become clear that a long-term use may cause to reduce durability of the polyimide porous film depending on a type thereof. It has been known that the polyimide resin has water absorbability and is hydrolyzed, but it is not known that there is a problem that durability may be reduced when using the polyimide resin as the substrate for the cation exchange type separation membrane for direct liquid fuel type fuel cell as shown in the above Japanese Unexamined Patent Publication 2004-171994. For example, the above publication states that there is no problem to use a porous film consisting of "a polyimide resin obtained by using pyromellitic dianhydride and diamine compound as materials" which is low in hydrolysis resistance. This may be because usage environment is under acidic condition and the above porous film is used as a substrate covered with an ion exchange resin, so that hydrolysis is hardly occurs and the effects may be limited even if occurs.

On the other hand, when using the same as a substrate for an anion exchange type separation membrane for direct liquid fuel type fuel cell, it was found that the above-described durability problem occurs. This may be caused by proceeding of hydrolysis until seriously affecting durability since hydrolysis of the polyimide resin (even when using as a substrate) is unavoidable due to an influence of the hydroxide ion generated at use. In this way, the above problem of reduced durability when using the polyimide porous film can be regarded as a specific problem arising when using the same as a substrate for an anion exchange type separation membrane for direct liquid fuel type fuel cell.

The present inventors have been dedicated to examinations for solving the above problem on durability. As a result, the present inventors found that it is possible to reproducibly maintain the strength even when using for a long period and to solve problems on heat resistance and durability at one effort when using a porous film comprising a polyimide resin having a certain level or higher of hydrolysis resistance as a substrate, and came to complete the present invention based on the findings.

Namely, the first aspect of the present invention is a separation membrane for fuel cell, consisting of a composite membrane which comprises a porous film being composed of hydrolysis resistant polyimide resin and an anion-exchange resin filled in a void portion of the porous film.

As said hydrolysis resistant polyimide resin, at least one selected from a group consisting of the following polyimide resins (i), (ii), (iii) and (iv) can preferably be used.
(i) a polyimide resin having a fluorenylidene group expressed by the following chemical formula in a main backbone: 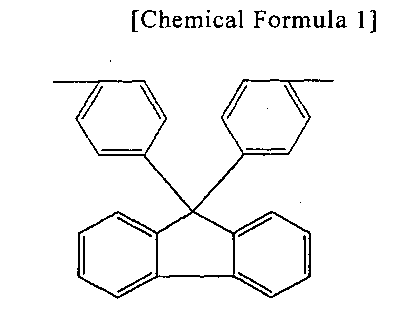 ;
(ii) a polyimide resin having a hydrophobic group in a side chain;
(iii) a polyimide resin having a cross-linked structure; and
(iv) a polyimide resin obtained from naphthalenetetracarboxylic dianhydride and/or biphenyltetracarboxylic dianhydride.

Note that "a resin having hydrolysis resistance" in the present invention means a resin whose tensile strength (tensile strength is measured by using an approximately 50 µm-thick film sample molded from the resin in accordance with ASTM D882) measured after the following treatments is 75% or more of a tensile strength of a film sample with an identical shape measured before the treatments.
Treatments: dipping the film sample in 10 mass% aqueous solution of sodium hydroxide at 25°C for 5 days followed by water washing and drying.

The above hydrolysis resistant polyimide resin exhibits low water absorption compared to ordinary polyimide resins, and is not sufficient in water retention characteristics, so that ion conductivity is liable to be lowered when the whole porous film is composed of the hydrolysis resistant polyimide resin. Therefore, for increasing ion conductivity as well as maintaining heat resistance and hydrolysis resistance, it is preferable that at least a part of a surface portion of said porous film is composed of a water-retentive resin in the separation membrane for fuel cell of the present invention. As the water-retentive resin, a partial hydrolysate of the hydrolysis resistant polyimide resin, a polyimide resin other than any one of said (i) to (iv), or a partial hydrolysate of the polyimide resin can be preferably used.

In the above separation membrane for fuel cell of the present invention, a porous film (porous membrane) comprising the above hydrolysis resistant polyimide resin preferably has a thickness of 3 µm or more to 50 µm or less from viewpoints of durability of the separation membrane for fuel cell and battery output of a direct liquid fuel type fuel cell using the separation membrane. Further from viewpoints of conductivity of hydroxide ion and easy-control of permeability of fuel and water, and viewpoints of ease of production and production cost, said anion-exchange resin is preferably a cross-linked hydrocarbon-based anion-exchange resin having a quaternary ammonium group as an anion exchange group.

When using the above separation membrane for fuel cell of the present invention to construct a fuel cell and providing an aqueous solution of fuel into a fuel chamber, it is unnecessary to separately provide water into an oxidizing agent chamber by permeating water component of the aqueous solution to the oxidizing agent chamber, so that the fuel cell can be downsized. In view of the above, the above-described separation membrane for fuel cell of the present invention preferably has water permeability.

Also, the second aspect of the present invention is an electrolyte membrane-electrode assembly, wherein electrodes including an electrode catalyst are bonded to both sides of the separation membrane for fuel cell of said first aspect of the present invention. In the electrolyte membrane-electrode assembly, main active constituent of said electrode catalyst is preferably transition metal from a viewpoint of production cost. Also, when using the above electrolyte membrane-electrode assembly of the present invention to construct a fuel cell, providing an aqueous solution of fuel to a fuel chamber and permeating water component of the aqueous solution to an oxidizing agent chamber to provide the water to the oxidizing agent chamber, battery performance may hardly be reduced even if fuel is permeated with water. From the above viewpoint, an electrode catalyst included in the electrode (fuel chamber side electrode) bonded to one side of the separation membrane for fuel cell has an activity to fuel; and an activity to fuel of an electrode catalyst included in the electrode (an oxidizing agent chamber side electrode) bonded to the other side is lower than the activity to fuel of the electrode catalyst included in said fuel chamber side electrode.

Further, the third aspect of the present invention is a direct liquid fuel type fuel cell, wherein the direct liquid fuel type fuel cell has a fuel chamber and an oxidizing agent chamber divided by an electrolyte membrane-electrode assembly in which electrodes including an electrode catalyst are bonded to both surfaces of an electrolyte membrane; one of electrodes of said electrolyte membrane-electrode assembly is present in the fuel chamber and the oxidizing agent chamber respectively; fuel is provided to said fuel chamber for reacting fuel and hydroxide ion on the electrode in the fuel chamber side; and water and an oxidizing agent are provided to said an oxidizing agent chamber for reacting these on the electrode in the oxidizing agent chamber side. In the above-described direct liquid fuel type fuel cell, said electrolyte membrane-electrode assembly is the electrolyte membrane-electrode assembly of said second aspect of the present invention. In the direct liquid fuel type fuel cell, it is unnecessary to separately provide water into the oxidizing agent chamber, and the fuel cell can be downsized. From the above viewpoint, it is preferable to provide fuel and water to said fuel chamber and to provide the water in the fuel chamber to said an oxidizing agent chamber by permeating the same through said electrolyte membrane-electrode assembly.

### EFFECTS OF THE INVENTION

Since the separation membrane for fuel cell of the first aspect of the present invention is anion exchange type, usable catalysts are not limited to noble metal such as platinum, and include transition metal catalyst such as nickel. Therefore, it is possible not only to largely reduce production cost of the fuel cell, but also to use a different catalyst in the fuel chamber side from the one used in the oxidizing agent chamber side. As a result, it is possible to use a catalyst with low activity to fuel as the catalyst of the oxidizing agent chamber side, and high output can be obtained even when the separation membrane for fuel cell has fuel permeability.

Also, since the substrate is composed of polyimide resin with high hydrolysis resistance in the separation membrane for fuel cell of the present invention, in addition to high heat resistance, performance is hardly deteriorated and high durability is shown even when using under basic environment that a hydroxide ion conducts. In addition, since the above substrate can be added with water-retaining function, it is possible to maintain high conductivity of a hydroxide ion, and to increase battery output when using the separation membrane for fuel cell of the present invention to form a fuel cell. Consequently, in applications that the battery is used at high temperature, e.g. application as an automotive fuel cell, high performance can be maintained for a long term.

Also, by adding water-retaining function to the substrate, the separation membrane for fuel cell of the present invention can be increased in water permeability. In case water permeability is added, it is unnecessary to separately provide water to the oxidizing agent chamber by permeating water component of an aqueous solution of fuel to the oxidizing agent side when using the separation membrane for fuel cell to construct a fuel cell and providing the aqueous solution of fuel to the fuel chamber, so that the fuel cell can be downsized. It has conventionally been thought that lower fuel permeability is better, and that a membrane with high water permeability is not suitable for a separation membrane for fuel cell since such a membrane may be high in fuel permeability. The above effect of the present invention is contrary to the common knowledge, and it enables to obtain the unexpected effect that selectable catalyst species are increased by using an anion-exchange resin, which has rarely focused on, as an ion exchange resin.

Also, the electrolyte membrane-electrode assembly of the second aspect of the present invention and the direct liquid fuel type fuel cell of the third aspect of the present invention show excellent characteristics as above due to the use of the separation membrane for fuel cell of the above present invention as the solid electrolyte membrane.

### BRIEF DESCRIPTION OF THE DRAWINGS

Fig.1 shows a schematic diagram of a basic structure of a solid polymer type fuel cell.

### DESCRIPTION OF SYMBOLS

1: cell bulkhead
2: fuel gas flow hole
3: oxidizing gas flow hole
4: fuel chamber side gas diffusion electrode
5: oxidizing agent chamber side gas diffusion electrode
6: solid polymer electrolyte membrane (anion exchange membrane)
7: fuel chamber
8: oxidizing agent chamber

### BEST MODE FOR WORKING THE INVENTION

### 1. Separation Membrane for Battery

The separation membrane for fuel cell of the present invention consists of a composite membrane comprising a porous film which is composed of a hydrolysis resistant polyimide resin and an anion-exchange resin filled a void portion of the porous film.

### 1-1. Hydrolysis Resistant Polyimide Resin

The above porous film constitutes a substrate holding the anion-exchange resin, and has a function to add the strength of the separation membrane for fuel cell as well as flexibility. Also, the porous film is high in heat resistance, and is composed of the polyimide resin, resulting in improving heat resistance when used for the separation membrane for fuel cell. In addition, because of using the polyimide resin with improved hydrolysis resistance, the separation membrane for fuel cell of the present invention is hardly deteriorated in performance even when using under basic condition that a hydroxide ion conducts, and shows high durability. Further, since a surface portion of the porous film is composed of a water-retentive resin, it is possible to maintain high conductivity of hydroxide ion, and to increase battery output when using the separation membrane for fuel cell of the present invention to construct a fuel cell.

In general, a polyimide resin is industrially produced by dehydrating and cyclizing polyamic acid obtained by reaction of equimolar amounts of tetracarboxylic dianhydride and diamine, or by reacting tetracarboxylic dianhydride and diisocyanate. Industrially available common polyimide resin has an excellent characteristic such that its heat resistance is high while it is known to exhibit water absorption and be easily hydrolyzed. To improve such a disadvantage of the polyimide resin, various hydrolysis resistant polyimide resins have been developed. As the hydrolysis resistant polyimide resin constructing the above porous film, these known hydrolysis resistant polyimide resins can be used without any particular limitation. Note that being hydrolysis resistant means, in the present invention, that tensile strength of an approximately 50 µm-thick film sample molded from a resin (tensile strength is measured in accordance with ASTM D882) measured after the following treatments is 75% or more of a tensile strength of a film sample with an identical shape measured before the treatments.
Treatments: dipping the film sample in 10 mass% aqueous solution of sodium hydroxide at 25°C for 5 days followed by water washing and drying.
Note that it is impossible to measure tensile strengths before and after dipping of one film sample, so that multiple film samples with identical shape are actually prepared by the same production method, and divided into two groups, the one for dipping and the other for not dipping to compare (average) tensile strength of each group.

From a viewpoint of ease of availability or production, it is preferable to use at least one selected from a group consisting of the following polyimide resins (i), (ii), (iii) and (iv) as a hydrolysis resistant polyimide resin.
(i) a polyimide resin having a fluorenylidene group with a structure expressed by the following formula in a main backbone: 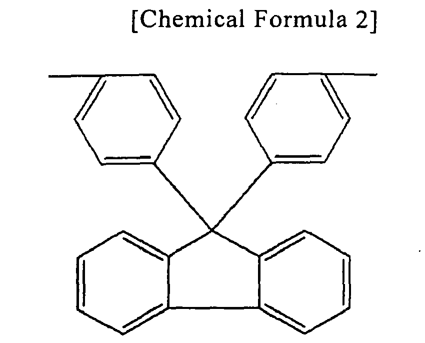
(ii) a polyimide resin having a hydrophobic group in a side chain;
(iii) a polyimide resin having a cross-linked structure; and
(iv) a polyimide resin obtained from naphthalenetetracarboxylic dianhydride and/or biphenyltetracarboxylic dianhydride.

The above polyimide resin (i) having a fluorenylidene group in a main backbone is for example disclosed in proceedings of Society of Polymer Science, Japan, 49, 11, p3495 (2000) and Japanese Journal of Polymer Science and Technology 50, 13, p3480(2001), the Japanese Unexamined Patent Publication 2003-277501 and Japanese Unexamined Patent Publication 2005-232236. In the present invention, these polyimide resins can be used without any particular limitation. Note that the polyimide resin is assumed to be used as a cation exchange resin in the above Japanese Unexamined Patent Publication 2005-232236, so that the polyimide resin disclosed in this patent article needs to have a sulfoalkoxy group. In the present invention, the polyimide resin is used as a substrate for an anion exchange type separation membrane for direct liquid fuel type fuel cell. Therefore, it is preferable not to have an acidic group, which causes an increase of hydrolysis activity or decrease of hydroxide ion amount, such as a sulfoalkoxy group and sulfonic group. The polyimide resin not having such a group can be easily produced by using materials not having the group in accordance with the production method disclosed in the Japanese Unexamined Patent Publication 2005-232236. For example, it is possible to obtain such a polyimide resin by dissolving 4,4'-(9-fluorenylidene)dianiline and diamino compound not having the above acidic group in an organic solvent, followed by adding tetracarboxylic dianhydride and heating the mixture.

As said polyimide resin (ii) having a hydrophobic group in a side chain, any polyimide resins, wherein a hydrophobic group is introduced into the side chain, can be used without any particular limitation. In this context, the hydrophobic group is preferably at least one selected from a group consisting of an alkyl group with carbon number of 3 to 12 and particularly 3 to 8, an aryl group with carbon number of 6 to 10, and a perfluoroalkyl group with carbon number of 1 to 10 and particularly 1 to 4. Also, it is preferable to include 1 to 4, preferably 1 or 2, of the above hydrophobic groups in every repeating unit of the polyimide. Note that in case the polyimide has a copolymer structure comprising several types of repeating units, there may be some repeating units having no hydrophobic group as long as the polyimide includes one or more of the above hydrophobic groups in every repeating unit on average. Introduction of a side chain comprising hydrophobic groups to the polyimide resin may be, as shown in the Japanese Unexamined Patent Publication 2003-64181 and Japanese Unexamined Patent Publication H04-8733 for instance, obtained by using a diamine compound having hydrophobic side chain as a material for the polyimide, obtaining a polyamic acid from the diamine material and tetracarboxylic dianhydride in accordance with the commonly-known method, and heating the same for imidization. Note that a diamine containing a sulfonic group is used in the method shown in the above Japanese Unexamined Patent Publication 2003-64181 since the method is supposed to produce a polyimide for a cation exchange resin. In present invention, however, the polyimide is used as the substrate for the anion exchange type separation membrane for direct liquid fuel type fuel cell, so that it is preferable to use a diamine not having a sulfonic group.

To obtain said polyimide resin (iii) having a cross-linked structure, a polyimide resin with an introduced functional group can be used, and a cross-linked structure is introduced by using the functional group. Namely, diisocyanate and a polyfunctional compound having hydroxyl groups in both ends are reacted to obtain a polyfunctional diisocyanate, the diisocyanate and tetracarboxylic dianhydride are reacted to produce a polyimide resin with introduced multiple functional groups, and a cross-linking agent suitable for the type of the introduced functional groups and the polyimide are reacted to obtain a cross-linked structure resin. As the above resin, for example, a modified polyimide resin composition as described in the Japanese Unexamined Patent Publication 2007-146188 may be mentioned. Namely, there may be mentioned a resin obtained by setting a composition comprising a modified polyimide resin having a specific structure obtained by reacting a bifunctional hydroxyl-terminated polybutadiene, diisocyanate and quadribasic dianhydride; a polybutadiene polyol having 2 to 10 hydroxyl groups per molecule; and a polybutadiene block isocyanate having 2 to 10 block isocyanate groups per molecule.

In the polyimide resin (iii) having a cross-linked structure, by containing the cross-linked portion, it is possible to maintain the cross-linked structure even when the polyimide backbone is partially destroyed by hydrolysis, resulting in suppressing a sharp decline of the strength. Note that as a method for forming a crosslink by using a functional group, any known methods may be applied, and bonding pattern of the crosslink is preferably the hardly-hydrolyzed pattern (e.g. bonding pattern formed by addition such as hydrosilylation).

Said polyimide resin (iv) obtained from naphthalenetetracarboxylic dianhydride and/or biphenyltetracarboxylic dianhydride is not particularly limited as long as the polyimide resin is imidized by heating a polyamic acid obtained by reacting naphthalenetetracarboxylic dianhydride and/or biphenyltetracarboxylic dianhydride with a diamine compound. Such a polyimide resin is disclosed in pages 49-56 of JFE GIHO No.8 (June, 2005). Among those polyimide resins (iv), in view of high hydrolysis resistance, it is preferable to use a polyimide resin obtained from naphthalenetetracarboxylic dianhydride as a material, and it is further preferable to use a polyimide resin obtained from naphthalenetetracarboxylic dianhydride as a material and having imide ring of six-membered ring structures. Such a polyimide resin is disclosed in Japanese Unexamined Patent Publication 2006-265496. The polyimide resin disclosed in the above publication is supposed to use as a cation exchange resin, so that the polyimide resin in the above publication is required to have a sulfonic group. In the present invention, the sulfonic group is preferably absent since the polyimide resin is used as a substrate for an anion exchange type separation membrane for direct liquid fuel type fuel cell. The polyimide resin having no sulfonic group can be produced by using a diamine compound having same structures except for containing no sulfonic group instead of the diamine compound used as a material in the above publication.

Note that in the present invention, it is possible to use a blended resin of polyimide resin and a resin with high hydrolysis resistance in addition to polyimide resins shown in the above (i) to (iv).

In the present invention, in view of high hydrolysis resistance, it is particularly preferable to use a polyimide resin simultaneously satisfying at least two of the properties shown in said (i), (ii) and (iv) as a hydrolysis resistant polyimide resin.

### 1-2. Porous Membrane

Some of porous films (porous membranes) comprising a hydrolysis resistant polyimide resin are commercially available, and other commercially-unavailable porous films can be easily produced by the following method. Namely, it can be easily produced by applying the above commercially-available hydrolysis resistant polyimide resin or the precursor as a material in a known method for producing a resin-based porous film (porous membrane). The applicable method for producing a porous film may preferably include a method wherein a polyamic acid solution obtained by polymerizing tetracarboxylic acid component and diamine component, which are materials for polyimide, in an organic solvent is subject to flow casting on a flat substrate, contacted with a porous polyolefin based solvent displacement rate adjusting agent, followed by dipping in a congealed liquid such as water to obtain a porous film precursor, and then, heated to imidize the same, as disclosed in the Japanese Unexamined Patent Publication H11-310658 or Japanese Unexamined Patent Publication 2004-171994; a method wherein hydrolysis resistant polyimide resin is molded in the form of film and irradiated with ultrashort pulsed-laser to form numerous fine pores, as disclosed in the Japanese Unexamined Patent Publication 2007-23183; a method wherein a film with dispersed tiny fillers of soluble polymer is formed and the soluble polymer is selectively dissolved and removed; a method wherein a film filled with tiny fillers is formed followed by flow casting of the film, and the filler is removed if necessary; etc.

The thickness of the porous film (porous membrane) composed by the hydrolysis resistant polyimide resin is preferably 3 µm or more to 50 µm or less. When the thickness is less than 3 µm, durability may be reduced due to the long-term use at a high temperature. When the thickness is over 50 µm, membrane resistance may increase and battery output is liable to decrease. The membrane thickness is particularly preferably 5 to 15 µm in terms of durability of the separation membrane for fuel cell and battery output of the direct liquid fuel type fuel cell using the membrane. Also, average pore diameter of the above porous film is generally 0.005 to 5.0 µm, more preferably 0.01 to 1.0 µm and most preferably 0.015 to 0.4 µm, in view of small membrane resistance and mechanical strength of the obtained anion exchange membrane. Also, porosity of the porous film is generally 20 to 95%, more preferably 30 to 80% and most preferably 30 to 50% because of the same reasons as of the above average pore diameter.

### 1-3. Water-Retentive Resin

In the porous film used as the substrate in the present invention, it is preferable to constitute at least a part of its surface portion with water-retentive resin since conductivity of the hydroxide ion can be increased by enhancing water retention characteristics to improve battery output when making a fuel cell by using the separation membrane for fuel cell of the present invention. The surface portion composed of the water-retentive resin may be all or a part of the surface portion of the outward surface of the porous film, and it is preferable that all or a part of the surface portion of an inner surface of the fine pores is composed of the water-retentive resin in view of high water retention characteristics.

As the water-retentive resin, any resin known to have hydrophilic property or hygroscopic property can be used without any particular limitation, and it is preferable to use partial hydrolysate of the hydrolysis resistant polyimide resin, a polyimide resin excluding any one of said (i) to (iv), or partial hydrolysate of these polyimide resins since it improves adhesion to said hydrolysis resistant polyimide resins without lowering heat resistance.

In the hydrolysis resistant polyimide resin, hydrolysis resistance is traded off for water retention characteristics, and water retention characteristics are low. When keeping a porous film formed by the hydrolysis resistant polyimide resin under basic environment equivalent to usage environment, water retention characteristics is improved by hydrolysis shown in surface proximity in a limited way gradually but insufficiently, and also, it takes time until the water retention characteristics stabilize. Therefore, it is preferable, for making the hydrolysis resistant polyimide resin preliminarily as resin with high water retention, to introduce a hydroxyl group or carboxyl group into the surface by plasma discharge treatment, particularly oxygen plasma treatment, etc., and to forcibly hydrolyze for breaking a part of -NC(=O)-bonds in the main chain. At this time, for the partial hydrolysis treatment, the porous film composed of the hydrolysis resistant polyimide resin is immersed in a strongly basic aqueous solution (e.g. an aqueous solution of sodium hydroxide or potassium hydroxide) heated at 40 to 80°C in a concentration of more than 1N for 5 minutes to 1 hour. With this partial hydrolysis treatment followed by the plasma discharge treatment, at least a part of the surface of the porous film can be transformed into water retention resin. By this method, not only outward surface of the film but also inner surface of the fine pores can be modified, resulting in particularly high water retention. Note that it is difficult to obtain sufficient effects only by the plasma discharge treatment.

Also, for constituting at least a part of the surface of the porous film with the water-retentive resin, a polyimide resin other than any of said (i) to (iv) is attached to at least a part of the surface of the porous film composed of the hydrolysis resistant polyimide resin, and this may be partially hydrolyzed if desired.
An industrially available standard polyimide resin other than any of said (i) to (iv), e.g. a polyimide resin obtained by using a tetracarboxylic dianhydride such as pyromellitic dianhydride and a diamine compound having no hydrophobic group such as diaminodiphenyl ether as raw materials, is known to have hygroscopic and water retention characteristics, and can preferably be used as the water retention resin.

For attaching such a polyimide resin to at least a part of the surface of the porous film composed of the hydrolysis resistant polyimide resin, dilute solution of the polyimide resin or its precursor may be prepared and absorbed in the above porous film, followed by distilling the solvent away, and if using the precursor solution, the precursor may be transformed into imide resin. By controlling the absorbed concentration and amount of the dilute solution, it is also possible to maintain porosity of the film even after attaching the polyimide resin to the surface.

Note that as a method for producing a porous film, when employing the method of contacting the casted polyamic acid solution with a porous polyolefin-based solvent displacement rate adjusting agent, followed by immersing it in a congealed liquid to obtain a precursor porous film, and then heating the same to imidize, a dilute solution of polyamic acid, which is a raw material of a polyimide as the water retention resin, may be absorbed into the precursor porous film, followed by heating to imidize. With this method, the hydrolysis resistant polyimide can be used for the polyimide as the water retention resin.

The above polyimide resin shows high water retention from the first, so that it is particularly unnecessary to preliminarily conduct the hydrolysis treatment, but the partial hydrolysis treatment may be conducted.

### 1-4. Anion-Exchange Resin

As an anion-exchange resin filled in a void portion of said porous film, in view of conductivity of hydroxide ion and ease of control on permeability of fuel or water, ease of production and production cost, it is preferable to use cross-linked hydrocarbon-based anion-exchange resin having a quaternary ammonium group as an anion exchange group. The "hydrocarbon-based" indicates here a portion excluding an ion-exchange group formed by a quaternary ammonium group is composed of a cross-linked hydrocarbon-based polymer, and the "hydrocarbon-based polymer" indicates a polymer in which most of the bonds in its main chain and side chain are carbon-carbon bond. Note that in the hydrocarbon-based polymer, a small amount of other atoms such as oxygen, nitrogen, silicon, sulfur, boron and phosphorus may be included in a form of ether bond, ester bond, amide bond, siloxane bond, etc. among the carbon-carbon bonds in the main chain and side chain. Also, all atoms bonded to the above main chain and side chain are not necessarily be hydrogen atoms, and may be substituted by a small amount of other atoms such as chlorine, bromine, fluorine and iodine, or substituent containing other atoms. The amount of atoms other than carbon and hydrogen may be 40 mol% or less, preferably 10 mol% or less, in all atoms included in the resin except for those of the anion exchange group.

The above anion-exchange resin may include a (chloromethyl)styrene / divinylbenzene copolymer to which a quaternary ammonium group is introduced, a 4-vinylpyridine / divinylbenzene copolymer to which a quaternary ammonium group is introduced; an anion-exchange resin disclosed in Japanese Unexamined Patent Publication 2003-155361, etc.

To fill the anion-exchange resin into void portion of the porous film, a polymerizable composition containing a polymerizable monomer having an anion exchange group or an active group exchangeable with an anion exchange group is contacted to the porous film to make it fill in the void portion of the porous film, followed by polymerization curing and cross-link, and then, if necessary, the above active group may be converted into an anion exchange group.

For example, when filling the above-mentioned preferable anion-exchange resin in the void portion of the porous film, a polymerizable composition including a polymerizable monomer having a halogeno-alkyl group, a crosslinkable polymerizable monomer and effective amount of a polymeric initiator is contacted with the porous film to fill the polymerizable composition in the void portion of the porous film, followed by polymerization curing and cross-link, and then, the above halogeno alkyl group may be converted to a quaternary ammonium group (e.g. Example 1 of Patent Article 1). Also, instead of the polymerizable monomer having a halogeno alkyl group, a polymerizable monomer having a functional group to which a halogeno alkyl group can be introduced, such as styrene, may be used, the halogeno alkyl group may be introduced after polymerization (cross-link), and then, the halogeno alkyl group may be converted into a quaternary ammonium group. Further, instead of a polymerizable monomer having a halogeno alkyl group, it is possible to use a polymerizable monomer to which a quaternary ammonium group is preliminarily introduced.

However, since it is easy to obtain an anion-exchange resin with high ion-exchange capacity and ease of control on density, it is preferable to employ the first method, i.e. a method to use a polymerizable monomer having a halogeno alkyl group. Also, in this case, it is preferable to add a compound having an epoxy group to the polymerizable composition for obtaining an anion-exchange resin with higher density. Without adding a compound having an epoxy group, density of the ion exchange resin may be lowered due to a slight amount of chlorine gas or hydrogen chloride gas obtained as a by-product derived from the halogeno alkyl group at polymerization, but when adding a compound having an epoxy group, the above by-product can be captured by the epoxy group, so that it is possible to prevent lowering the density.

### 1-5. Materials for Anion-Exchange Resin

In the above method, as the polymerizable monomer having a halogeno alkyl group, any known one can be used without any limitation. The halogeno alkyl group includes a chloromethyl group, a bromomethyl group, an iodomethyl group, a chloroethyl group, a bromoethyl group, an iodoethyl group, a chloropropyl group, a bromopropyl group, an iodopropyl group, a chlorobutyl group, a bromobutyl group, an iodobutyl group, a chloropentyl group, a bromopentyl group, an iodopentyl group, a chlorohexyl group, a bromohexyl group and an iodohexyl group. As a specific example of the polymerizable monomer having a halogeno alkyl group, there may be mentioned chloromethyl styrene, bromomethyl styrene, iodomethyl styrene, chloroethyl styrene, bromoethyl styrene, iodoethyl styrene, chloropropyl styrene, bromopropyl styrene, iodopropyl styrene, chlorobutyl styrene, bromobutyl styrene, iodobutyl styrene, chloropentyl styrene, bromopentyl styrene, iodopentyl styrene, chlorohexyl styrene, bromohexyl styrene and iodohexyl styrene, and it is particularly preferable to use chloromethyl styrene, bromomethyl styrene, iodomethyl styrene, chloroethyl styrene, bromoethyl styrene, iodoethyl styrene, chloropropyl styrene, bromopropyl styrene, iodopropyl styrene, chlorobutyl styrene, bromobutyl styrene or iodobutyl styrene among these.

As the crosslinkable polymerizable monomer, although not particularly limited, for example, a divinyl compound such as divinylbenzenes, divinyl sulfone, butadiene, chloroprene, divinylbiphenyl, trivinylbenzenes, divinylnaphthalene, diallylamine and divinylpyridines can be used. The crosslinkable polymerizable monomer is normally used in an amount of 1 to 20 parts by mass, preferably 2 to 7 parts by mass, per 100 parts by mass of the polymerizable monomer having a halogeno alkyl group. By controlling this amount used of the crosslinkable polymerizable monomer, the degree of cross-linkage can be controlled, and permeability of fuel or water can be controlled as well.

As the compound (epoxy compound) having an epoxy group, any known compound having one or more of epoxy groups in a molecule can be used without any limitation. Specifically, there may be mentioned epoxidized vegetable oil such as epoxidized soybean oil and epoxidized linseed oil or derivatives thereof, terpene oxide, styrene oxide or derivatives thereof, epoxidized α-olefin, epoxidized polymer etc. Such an epoxy compound can be obtained by a method disclosed in Japanese Unexamined Patent Publication H11-158486, and it is also available as a commercialized product (e.g. ADEKA's "ADK CIZER", KAO's "KAPOX", Kyoeisha Chemical's "EPOLIGHT", Daicel Chemical Industries' "CYCLOMER" and "DAIMAC" and Nagase ChemteX Corporation's "DENACOL"). It is preferable to use the epoxy compound in an amount of 1 to 12 parts by mass, particularly 3 to 8 parts by mass, per 100 parts by mass of the polymerizable monomer having a halogeno alkyl group.

Conventionally known polymeric initiators can be used without any particular limitation. Specific examples of the polymeric initiator include organic peroxide such as octanoyl peroxide, lauroyl peroxide, t-butylperoxy-2-ethylhexanoate, benzoyl peroxide, t-butylperoxy isobutylate, t-butylperoxy laurate, t-hexylperoxy benzoate and di-t-butyl peroxide. The ratio of the amount added of the polymeric initiator can be in a broad range as long as it is effective amount required to perform polymerization, and in general, it is preferable to add 0.1 to 20 parts by mass, preferably 0.5 to 10 parts by mass, per 100 parts by mass of the polymerizable monomer having a halogeno alkyl group.

Note that it is possible to properly add other components to said polymerizable composition, within the range to gain the present effects. Particularly, in addition to the above polymerizable monomer having a halogeno alkyl group and crosslinkable polymerizable monomer, other monomers copolymerizable with these monomers and plasticizers may be added if necessary. As these other monomers, for example, styrene, acrylonitrile, methylstyrene, acrolein, methyl vinyl ketone, vinylbiphenyl, etc. may be used. The amount added is preferably 100 parts by mass or less, more preferably 80 parts by mass or less and further preferably 30 parts by mass or less, per 100 parts by mass of the polymerizable monomer having a halogeno alkyl group.

Also, as the plasticizers, dibutyl phthalate, dioctyl phthalate, dimethyl isophthalate, dibutyl adipate, triethyl citrate, acetyltributyl citrate, dibutyl sebacate, etc. may be used. The amount added is preferably 50 parts by mass or less, more preferably 30 parts by mass or less, per 100 parts by mass of the polymerizable monomer having a halogeno alkyl group.

### 1-6. Filling Procedure of Anion-Exchange Resin

As a procedure for filling the above polymerizable composition into said porous film, there may be employed a method to dip the porous film in the polymerizable composition, a method to apply or spray the polymerizable composition on the porous film, etc. For surely and evenly filling it into the fine pores within the porous film, while dipping it in the polymerizable composition, the porous film is preferably subject to pressure reduction or ultrasonic irradiation.

As a polymerization method for the monomer composition filled into the void portion of the porous film, in general, the preferable method includes sandwiching the porous film between films such as polyester and raising its temperature from room temperature under increased pressure. The polymerization condition may be affected by the kind of the related polymeric initiators, constituents of the monomer composition, etc., and properly selected without any particular limitation.

For the membrane-like product obtained after the polymerization, the halogeno alkyl group derived from the polymerizable monomer having a halogeno alkyl group and included in the resin is converted into a quaternization ammonium group. The quaternization method may be the common method. For example, by immersing the membrane-like product obtained after polymerization into a solution including tertiary amine such as trimethylamine, triethylamine and dimethylaminoethanol at 5 to 50°C for 10 hours or longer, the halogeno alkyl group can easily be converted into a quaternary ammonium group. With such a method, it is possible to obtain anion-exchange resin having anion-exchange capacity of 0.2 to 3 mmol·g⁻¹, preferably 0.5 to 2.5 mmol·g⁻¹.

As described above, a composite membrane (anion-exchange resin membrane) wherein the quaternary ammonium type hydrocarbon-based anion-exchange resin is filled into the void portion of the porous film can be obtained. The obtained composite membrane is, if necessary, washed, cut, etc., and in accordance with the common method, it is used as a separation membrane for a direct liquid fuel type fuel cell. Note that its moisture content at 25°C is preferably maintained to 7 % or higher, more preferably 10 to 90% or so, in the above composite membrane in order to hardly lower the conductivity of the hydroxide ion due to drying.

### 1-7. Water Permeability

In the separation membrane for fuel cell of the present invention, by constituting at least a part of the surface portion of said porous film with water-retentive resin, water permeability (water permeability or moisture permeability) can be increased. With water permeability, when fuel is provided to the fuel chamber as an aqueous solution, by permeating water component of the aqueous solution into the oxidizing agent chamber side, it is unnecessary to separately provide water to the oxidizing agent chamber, so that the fuel cell can be downsized. For such a reason, the separation membrane for fuel cell of the present invention preferably has water permeability. Water permeability can be measured as below. Namely, the separation membrane for fuel cell is set in the fuel cell (electrolyte membrane area of 5 cm²) placed in a constant temperature reservoir at 25°C, water is provided by supply pump for liquid chromatography, and argon gas is provided to the opposite side of the membrane at 300 ml·min.⁻¹. Then, water concentration in the argon gas collected by a gas container can be obtained by measuring with gas chromatography. In the separation membrane for fuel cell of the present invention, thus-measured water permeability is preferably 500 g·m⁻²·hr⁻¹ or more to 7000 g·m⁻²·hr⁻¹ or less, particularly preferably 1000 g·m⁻²·hr⁻¹ or more to 5000 g·m⁻²·hr⁻¹ or less. When the water permeability exceeds 7000 g·m⁻²·hr⁻¹, an influence from fuel inevitably penetrated with water may not be negligible. Note that such water permeability can be maintained by controlling degree of cross-linkage of said ion exchange resin.

### 2. Electrolyte Membrane-Electrode Assembly

When applying it to the above basic structure type of direct liquid fuel type fuel cell, normally, the separation membrane for fuel cell of the present invention is used as an electrolyte membrane-electrode assembly in which a fuel chamber side gas diffusion electrode and an oxidizing agent chamber side gas diffusion electrode are respectively bonded on the both sides thereof. Such an electrolyte membrane-electrode assembly can be produced by the following preferable methods. In one method, an electrode catalyst is, if necessary, added with bonding agent or dispersion media to turn into a paste composition; then, the paste composition is directly formed into a roll or applied onto a support layer material such as carbon paper followed by heat treatment to obtain a layered substance; and an ion conductivity providing agent is applied onto its bonding surface followed by drying if necessary and thermocompression with the separation membrane for fuel cell of the present invention. In another method, an electrode catalyst is added with an ion conductivity providing agent and if necessary, bonding agent or dispersion media to turn into a paste composition; then, the paste composition is applied onto a support layer material such as carbon paper or applied onto a blank to transfer it on the separation membrane for fuel cell of the present invention, or the paste composition is directly applied onto the separation membrane for fuel cell of the present invention, followed by drying and then thermocompression with the solid polymer electrolyte membrane. Also, as disclosed in Japanese Unexamined Patent Publication 2003-86193, after obtaining a formed article comprising 2 or more organic compounds formable of ion exchange resin by contacting each other to cross-link, and a composition containing an electrode catalyst, said 2 or more organic compounds included in the formed article are cross-linked to form a gas diffusion electrode, and the resulting electrode may be bonded onto each of the both surfaces of separation membrane for fuel cell of the present invention.

Also, as the ion conductivity providing agent, an ion conductivity providing agent for gas diffusion electrode of polymeric fuel cell as disclosed in Japanese Unexamined Patent Publication 2002-367626 is preferably used, which is a hydrocarbon-based polymeric elastomer, having an anion exchange group in a molecule and being poorly-soluble in water and methanol, or its solution or suspension.

### 2-1. Electrode Catalyst

As the electrode catalyst, metallic particle used as an electrode catalyst in a conventional gas diffusion electrode and accelerating oxidation reaction of hydrogen and reduction reaction of oxygen, such as platinum, gold, silver, palladium, iridium, rhodium, ruthenium, tin, iron, cobalt, nickel, molybdenum, tungsten and vanadium, or alloy thereof, can be used without any limitation, and in view of cost, it is preferable to use a transition metal catalyst. These catalysts may be preliminarily supported by a conductive agent before use. The conductive agent is not particularly limited as long as it is an electronically conductive substance, and for example, carbon black such as furnace black and acetylene black, activated carbon, graphite, etc. is usually used alone or in the mixture.

Note that in the electrolyte membrane-electrode assembly using the separation membrane for fuel cell of the present invention, when the fuel and water are provided into the fuel chamber of the fuel cell, and the water provided into the fuel chamber is permeated through said electrolyte membrane-electrode assembly to provide it into the oxidizing agent chamber, it is preferable to use an electrode catalyst active to the fuel, which is included in the electrode (fuel chamber side electrode) bonded to one surface of the separation membrane for fuel cell, and to use another electrode catalyst for the one included in the electrode (an oxidizing agent chamber side electrode) bonded to the other surface which has lower activity to the fuel than the activity to the fuel of the electrode catalyst included in said fuel chamber side electrode, to prevent lowering the output caused by the fuel penetrated with the water. The activity to the fuel of the electrode catalyst included in the oxidizing agent chamber side electrode is preferably 1/10 or less, particularly preferably 1/100 or less and most preferably 1/1000 or less, with respect to the activity to the fuel of the electrode catalyst included in the fuel chamber side electrode. It is possible to select such a catalyst easily by conducting a simple activity test for each kind of the used fuels.

### 3. Direct Liquid Fuel Type Fuel Cell

The common direct liquid fuel type fuel cell in which the separation membrane for fuel cell of the present invention is used is the one having the above-mentioned basic structure in FIG.1, i.e. a direct liquid fuel type fuel cell comprising a fuel chamber, an oxidizing agent chamber and an electrolyte membrane-electrode assembly obtained by bonding electrodes including an electrode catalyst to both surfaces of an electrolyte membrane, in which the fuel chamber and the oxidizing agent chamber are partitioned by the electrolyte membrane-electrode assembly; either one of the electrodes of said electrolyte membrane-electrode assembly is present in the fuel chamber or the oxidizing agent chamber; fuel is provided to said fuel chamber to react the fuel with hydroxide ion on the electrode in the fuel chamber side; and water and an oxidizing agent are provided to said oxidizing agent chamber to react them on the electrode in the oxidizing agent chamber side. However, the use of the separation membrane for fuel cell of the present invention is not limited to this type of fuel cell, and this membrane can also be used for any direct liquid fuel type fuel cell having the other known structure. As a liquid for fuel, methanol is most commonly used, and even with other liquid fuel such as ethanol, ethylene glycol, dimethyl ether and hydrazine, the excellent effects can equivalently be obtained. These fuels may be provided directly into the fuel chamber, and it is preferable to provide in an aqueous solution in view of the ease of handling and safety. Since the above-mentioned electrolyte membrane-electrode assembly of the present invention is used in the fuel cell of the present invention, it is possible to provide the fuel and water into the fuel chamber of the fuel cell, and to penetrate the water provided in the fuel chamber through said electrolyte membrane-electrode assembly to provide it into the oxidizing agent chamber. When using an electrolyte membrane-electrode assembly having a separation membrane for fuel cell without water permeability, an instrument for providing water to an oxidizing agent chamber is separately required, but such an instrument is unnecessary by penetrating the water through said electrolyte membrane-electrode assembly to provide it into the oxidizing agent chamber. Therefore, the fuel cell of the present invention can be downsized. Further, in the fuel cell of the present invention, an electrode catalyst included in the oxidizing agent chamber side electrode has lower activity to the fuel than the activity to the fuel of an electrode catalyst included in the fuel chamber side electrode, so that it is possible to prevent lowering battery output even when the fuel penetrates through with the water.

### EXAMPLES

Hereinafter, the present invention will be described further in detail based on examples, but the present invention is not limited to these examples.

### Examples 1 to 3 and Comparative Example 1

Using tetracarboxylic dianhydride and diamine compound shown in Table 1, polyimide resin film having a thickness of about 50 µm was produced. Note that the polyimide resin of Example 3 was produced in accordance with the method disclosed in Example 1 of Japanese Unexamined Patent Publication 2003-277501. For each sample cut out of the obtained polyimide resin film, tensile strength (reference value) was obtained. Also aside from this, similarly prepared samples were immersed in 10 mass% of aqueous sodium hydroxide solution for 5 days followed by washing with water and drying, and tensile strength (test value) was similarly measured. Hydrolysis resistant was evaluated based on strength retention [{(test value)/(reference value)}×100(%)] obtained by these measured values. Note that the criteria for evaluation on strength retention were defined as follows: 90% or more was S, 80% or more to less than 90% was A, 75% or more to less than 80% was B and less than 75% was D. The results are shown in Table 1.

Note that the designations in the column of raw materials in Table 1 respectively indicate the following compounds.
[Tetracarboxylic Dianhydride]
- s-BPDA: 3,3'4,4'-biphenyltetracarboxylic dianhydride
- TCND: naphthalene-1,8:4,5-tetracarboxylic dianhydride
- PMDA: pyromellitic acid dianhydride
   [Diamine Compound]
- ODA: 1,4-diaminodiphenyl ether
- DAP: 4,4'-diaminobiphenyl
- FDA: 4,4'-(9-fluorenylidene)dianiline
- TFMDAP: 2,2'-bis(trifluoromethyl)-4,4'-diaminobiphenyl.

Separately, using tetracarboxylic dianhydride and diamine compound shown in Table 1, a porous film with a thickness of about 15 µm was prepared as below. Namely, nearly equivalent mols of tetracarboxylic dianhydride and diamine compound were first dissolved in N-methyl pyrrolidone followed by polymerization at 0 to 60°C to prepare a polyamic acid solution (logarithmic viscosity of 0.5 to 7). Next, this was casted on a glass plate to obtain a casted membrane with a predetermined thickness, and then, the casted membrane was covered with a polyethylene porous film and immersed in an aqueous N-methyl pyrrolidone solution to precipitate polyamic acid. Then, this was further immersed in ion-exchange water, and the glass plate and polyethylene porous film were peeled off from the obtained polyamic acid film. The obtained polyamic acid film was applied on a tenter, and heated at about 300°C in the atmosphere, so that a polyimide resin porous film was obtained.

Next, a variety of thus obtained polyimide resin porous films was immersed in polymerizable composition, and then taken out of the polymerizable composition, and both sides of the porous film were covered with 100-µm polyester films as a separating material, followed by thermal polymerization in nitrogen under small pressure at 80°C for 5 hours. Note that 100 parts by mass of p-chloromethyl styrene, 5 parts by mass of divinylbenzene, 5 parts by mass of t-butyl peroxyethylhexanoate and 5 parts by mass of Kyoeisha Chemical's EPOLIGHT 40E (epoxy compound) were mixed to use as the polymerizable composition. Then, after the obtained membrane-like product was immersed in an aqueous solution containing 6 mass% of trimethylamine and 25 mass% of acetone at room temperature for 16 hours, its counterion was converted from chloride ion to hydroxide ion with 0.5% of aqueous sodium hydroxide solution, so that a separation membrane for fuel cell wherein cross-linked hydrocarbon-based anion-exchange resin having a quaternary ammonium group was filled in void portion of the porous film was obtained.

For the obtained separation membrane for fuel cell, water permeability test, hydrolysis resistant test and output voltage measurement of the fuel cell were conducted as below. The results of the evaluation are shown in Table 1.

Water Permeability Test: the separation membrane for fuel cell was set in the fuel cell (electrolyte membrane area of 5 cm²) placed in a constant temperature reservoir at 25°C; water was provided into one of the spaces divided by the membrane by supply pump for liquid chromatography; argon gas was provided into the other space at 300 ml·min.⁻¹; and the argon gas passing through the fuel cell was collected by gas container, so that water permeability was evaluated by the amount of penetrated water per unit area of the membrane and unit time, obtained by measuring water concentration in the argon gas with gas chromatography. The criteria for evaluation were: A when the amount was 1000 g·m-²·hr⁻¹ or more to 5000 g·m⁻²·hr⁻ or less; B when the amount was 500 g·m⁻²·hr⁻¹ or more to less than 1000 g·m⁻²·hr⁻¹; and C when the amount was less than 500 g·m⁻²·hr⁻¹.

Hydrolysis Resistant Test: except for the difference in sample, the same test was conducted as in the test for the polyimide resin film. The criteria for evaluation were also same as with the polyimide resin film.

Output Voltage Measurement of the Fuel Cell: after chloromethyl styrene-styrene copolymer was quaternized by trimethylamine, a mixture of tetrahydrofuran solution (resin concentration of 5 wt %) of anion-exchange resin, in which the counterion was converted to hydroxide ion, and Ni catalyst was applied onto carbon paper with a thickness of 100 µm and porosity of 80% treated for water-repellent with polytetrafluoroethylene, and dried under reduced pressure while heating to prepare a gas diffusion electrode. Next, the above gas diffusion electrodes were hot pressed on both surfaces of the separation membrane for fuel cell to be measured to obtain an electrolyte membrane-electrode assembly. This was set in a fuel cell having the structure of FIG.1, the fuel cell temperature was set at 50°C, and electric generation test was conducted by providing 10 wt% of aqueous methanol solution to the fuel side and oxygen in atmospheric pressure to the oxidizing agent side at 200 ml·min.⁻¹, so that terminal voltages of the cell at current density of 0 A·cm⁻² and 0.1 A·cm⁻² were measured. Note that the above measurements were intended for relative comparison of effects of the separation membrane for fuel cell, not for checking the maximum output. Therefore, the absolute value of the output itself was not particularly important.

**[Table 1]**

| No. | Polyimide resin | | | Fuel-cell membrane | | | |
|---|---|---|---|---|---|---|---|
| | Materials | | Hydrolysis resistance | Hydrolysis resistance | Water permeability | Fuel-cell output | |
| | tetracarboxylic dianhydrides | diamine compound | | | | at 0 (A/cm⁻²) | at 0.1 (A/cm⁻²) |
| Example 1 | s-BPDA | ODA | A | A | C | 0.68 | 0.21 |
| Example 2 | s-BPDA | TFMDAP | S | S | D | 0.61 | 0.18 |
| Example 3 | TCND | DAP + FDA | A | S | C | 0.71 | 0.23 |
| Comparative Example 1 | PMDA | ODA | D | D | B | 0.81 | 0.25 |

### Examples 4 to 6

Except for pretreating the porous film before filling of the hydrocarbon-based anion-exchange resin, a separation membrane for fuel cell was produced and evaluated as in Examples 1 to 3. The results are shown in Table 2. Note that the pretreatment was conducted by immersing the porous film in 1N aqueous solution of sodium hydroxide heated at 40°C for 15 minutes after oxygen plasma treatment on the porous film. Also, the fuel cell output was evaluated with an increasing rate [{(Vₘ-Vr)/Vᵣ}×100(%)] of the measured value (Vₘ) to the value (Vᵣ) when using a porous film without pretreatment.

**[Table 2]**

| Example No. | Porous membrane | Water permeability | Fuel-cell output increasing rate (%) | |
|---|---|---|---|---|
| | | | at 0 (A/cm⁻²) | at 0.1 (A/cm⁻²) |
| 4 | Example 1 | B | 18 | 22 |
| 5 | Example 2 | C | 15 | 19 |
| 6 | Example 3 | B | 17 | 21 |
| 7 | Example 1 | B | 19 | 20 |

### Example 7

The same polyamic acid solution as used in Comparative Example 1 was diluted by the same solvent to prepare 0.1 mass% of polyamic acid solution. Except that the above polyamic acid solution was absorbed into a dried precursor porous film followed by further drying before heating the precursor porous film, a fuel cell separation membrane was produced and evaluated as in Example 1. The results are shown in Table 2
Note that the absorbed amount of the polyamic acid solution was calculated based on the preliminarily measured surface area of the polyimide resin porous film produced in Example 1 on the assumption that 0.1 g/m² of the polyamic acid was absorbed.

## Claims

1. A separation membrane for fuel-cell, consisting of a composite membrane which comprises a porous film being composed of hydrolysis resistant polyimide resin and an anion-exchange resin filled in a void portion of the porous film.

2. The separation membrane for fuel cell as set forth in claim 1, wherein at least a part of a surface portion of said porous film is composed of a water-retentive resin.

3. The separation membrane for fuel cell as set forth in claim 1 or 2, wherein said hydrolysis resistant polyimide resin is at least one selected from a group consisting of
(i) a polyimide resin having a fluorenylidene group expressed by the following chemical formula in a main framework: 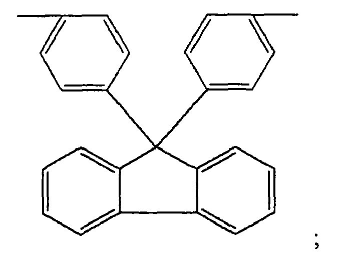
(ii) a polyimide resin having a hydrophobic group in a side chain;
(iii) a polyimide resin having a cross-linked structure; and
(iv) a polyimide resin obtained from naphthalenetetracarboxylic dianhydride and/or biphenyltetracarboxylic dianhydride.

4. The separation membrane for fuel cell as set forth in claim 3, wherein said water-retentive resin is a partial hydrolysate of the hydrolysis resistant polyimide resin forming said porous film, a polyimide resin other than any one of said (i) to (iv), or a partial hydrolysate of the polyimide resin.

5. The separation membrane for fuel cell as set forth in any one of claims 1 to 4, wherein a thickness of said porous film is 3 µm or more and 50 µm or less.

6. The separation membrane for fuel cell as set forth in any one of claims 1 to 5. wherein said anion-exchange resin is a cross-linked hydrocarbon-based anion-exchange resin having a quaternary ammonium group as an anion exchange group.

7. The separation membrane for fuel cell as set forth in any one of claims 1 to 6, having water permeability.

8. An electrolyte membrane-electrode assembly, wherein electrodes including an electrode catalyst are bonded to both sides of the separation membrane for fuel cell as set forth in any one of claims 1 to 7.

9. The electrolyte membrane-electrode assembly as set forth in claim 7, wherein main active constituent of said electrode catalyst is transition metal.

10. The electrolyte membrane-electrode assembly as set forth in claim 9, wherein
an electrode catalyst included in the electrode bonded to one side of the separation membrane for fuel cell has an activity to fuel; and
an activity to fuel of an electrode catalyst included in the electrode bonded to the other side is lower than the activity of the electrode catalyst included in the electrode bonded to one side of the separation membrane to fuel.

11. A direct liquid fuel type fuel cell, comprising a fuel chamber, an oxidizing agent chamber and an electrolyte membrane-electrode assembly obtained by bonding electrodes including an electrode catalyst to both surfaces of an electrolyte membrane, in which
the fuel chamber and the oxidizing agent chamber are partitioned by the electrolyte membrane-electrode assembly;
one of the electrodes of said electrolyte membrane-electrode assembly is present in the fuel chamber and the oxidizing agent chamber respectively;
fuel is provided to said fuel chamber to react the fuel with hydroxide ion on the electrode in the fuel chamber side; and
water and an oxidizing agent are provided to said oxidizing agent chamber to react them on the electrode in the oxidizing agent chamber side;
wherein the electrolyte membrane-electrode assembly is the electrolyte membrane-electrode assembly as set forth in any one of claims 8 to 10.

12. The direct liquid fuel type fuel cell as set forth in claim 11, wherein fuel and water are provided to said fuel chamber; and
the water provided to the fuel chamber is penetrated through said electrolyte membrane-electrode assembly and the water is provided to said oxidizing agent chamber.
